# FASCICULE DE BREVET EUROPEEN

(11) **EP 3 079 886 B1**
(45) Date de publication et mention de la délivrance du brevet: **07.02.2018**
(21) Numéro de dépôt: 14818933.5
(22) Date de dépôt: 12.12.2014
(51) Int. Cl.: B29C 70/54, B29C 70/88, B29C 33/16, B29C 70/30, B29K 101/12, B29K 705/00

(54) **PROCÉDÉ DE FABRICATION D'UNE PIÈCE EN MATÉRIAU COMPOSITE THERMOPLASTIQUE**
VERFAHREN ZUR HERSTELLUNG EINES TEILS AUS EINEM THERMOPLASTISCHEN VERBUNDSTOFFMATERIAL
METHOD FOR PRODUCTION OF A PART FROM THERMOPLASTIC COMPOSITE MATERIAL

(30) Priorité: 13.12.2013 FR 1362566
(43) Date de publication de la demande: 19.10.2016
(73) Titulaire: Airbus Group SAS, 31700 Blagnac (FR)
(72) Inventeur: SOCCARD, Eric, F-44130 Blain (FR)
(74) Mandataire: Ipside
(86) Numéro de dépôt international: PCT/EP2014/077626
(87) Numéro de publication internationale: WO 2015/086834

(56) Documents cités:
- EP-A1- 2 159 039
- FR-A1- 2 881 371
- JP-A- H05 261 849

## Description

L'invention appartient au domaine des matériaux composites comportant une succession de plis superposés pour former l'épaisseur d'une pièce réalisée en matériau composite.

Plus particulièrement l'invention concerne un procédé pour la réalisation d'une pièce en matériau composite formée par un empilage de plis déposés sur une matrice ou un moule donnant une forme à la pièce.

Plus particulièrement l'invention apporte une solution au dépôt du premier pli déposé sur le moule.

Lorsqu'une pièce en matériau composite comportant des fibres imprégnées de résine est réalisée sur un moule, il doit être pris en considération que la pièce devra être démoulée, séparée du moule, lorsque tous les plis souhaités auront été déposés et consolidés par les procédés connus.

Dans le cas des matériaux composites dits thermoplastiques, c'est-à-dire dont la résine imprégnant les fibres est dure à la température d'utilisation et se ramollit lorsque la température est élevée à une valeur suffisante de formage thermoplastique, chaque pli déposé adhère au pli précédent sur lequel il est déposé. Pour maintenir le premier pli sur le moule, en l'absence d'une pégosité de la résine qui permettrait de faire adhérer le pli à la surface du moule, il est connu de brider le premier pli déposé sur un moule. Une telle solution est performante lorsque la forme du moule est convexe mais ne permet pas de garantir dans le cas d'une forme concave du moule que le premier pli épouse parfaitement la forme du moule. Le document EP2159039 A1 divulgue un procédé de réalisation d'une pièce en matériau composite thermoplastique par dépôt d'au moins une couche en matériau composite thermoplastique sur un outillage, selon le préambule de la revendication 1. Il en résulte que les pièces en matériau composite thermoplastique de formes complexes réalisées sur un moule comportant, ne serait-ce que localement, des formes concaves sont délicates à réaliser et qu'il n'existe pas de solutions industriellement satisfaisantes dans de telles conditions.

L'invention propose précisément un procédé qui permet de s'affranchir des contraintes des solutions connues pour réaliser une pièce en matériau composite thermoplastique par dépôt de couche de matériau sur un outillage donnant la forme de la pièce.

Suivant le procédé de réalisation d'une pièce en matériau composite thermoplastique par dépôt d'au moins une couche en matériau composite thermoplastique sur un outillage, il est mis en oeuvre une étape de dépôt sur l'outillage d'un premier pli, déposé sur l'outillage avant le dépôt de la couche en matériau composite thermoplastique. Ce premier pli est un pli durci réalisé préalablement suivant la forme de l'outillage et comportant un premier matériau apte à subir une force d'attraction lorsqu'il est soumis à un champ magnétique, et ou à une différence de potentiel électrique, et comportant un second matériau d'une résine thermoplastique, chimiquement compatible avec la résine de la couche en matériau composite thermoplastique pour adhérer avec la dite résine, ce premier pli étant bridé sur l'outillage lors de l'étape de dépôt de ce premier pli sur l'outillage par l'effet d'un champ magnétique créé au niveau de l'outillage, et ou d'une différence de potentiel électrique entre l'outillage et le premier pli,.

Il est ainsi obtenu un bridage du premier pli sur l'outillage qui est réalisé sans liaison chimique et donc parfaitement démoulable, qui adhère parfaitement à l'outillage en tout point de la surface du fait de l'homogénéité de l'attraction magnétique et ou de la force résultant de la différence de potentiel réalisée sur le premier pli, et qui permet de déposer les couches de matériau composite sur la surface libre du premier pli avec une parfaite adhérence sans que le premier pli ne se déplace ou ne se déforme sur l'outillage.

Suivant une méthode de mise en oeuvre, le second matériau est déposé sur ledit premier matériau sous la forme d'une poudre de résine thermoplastique, puis le premier matériau et le second matériau sont soumis, bridé sur un moule de premier pli, lors d'une étape de fabrication du premier pli, à une étape d'élévation de la température au-dessus d'une température de fusion et de transformation vitreuse de la résine thermoplastique, la forme du moule de premier pli étant une contrepartie de l'outillage.

Il est ainsi réalisé un premier pli durci, relativement mince, qui conserve la forme du moule de premier pli et donc la forme de l'outillage, et qui peut alors être placé sur l'outillage pour y être bridé et recevoir les couches de matériau composite thermoplastique.

Dans un mode de mise en oeuvre du procédé, le premier matériau est déposé sur le moule de premier pli dans une première étape et, dans une seconde étape, le second matériau est déposé par projection de la poudre de résine thermoplastique sur le premier matériau déposé sur le moule de premier pli.

Suivant cette méthode de réalisation du premier pli, la résine thermoplastique peut être répartie uniformément sur le premier matériau et avec une densité de surface contrôlable pour obtenir la quantité souhaitable de résine thermoplastique pour apporter au premier pli, après l'élévation de température, la solidité souhaitée et les qualités d'accrochage des couches thermoplastiques.

Le premier matériau est constitué principalement de fils tissés ou non tissés, et ou de mats, et ou de poudres, déposés pour former une ou plusieurs couches superposées.

Il est ainsi possible de former le premier matériau sur le moule de premier pli en déposant des nappes de fils ou des tissus ou fibres entrelacés dont la souplesse permet de suivre les courbures du moule de premier pli, avec une épaisseur et une solidité résultante souhaitée. Le dépôt d'un matériau en poudre permet de déposer une couche uniforme sur le moule de premier pli. Dans ce cas la poudre du premier matériau peut être projeté en mélange avec la poudre de résine thermoplastique du second matériau, voire enrobée avec de la résine du second matériau. ces différentes méthodes peuvent être combinées, en particulier pour prendre en compte des caractéristiques locales du premier pli dictées par la forme de la pièce à réaliser.

Dans une forme de réalisation, le premier matériau est déposé sur le moule de premier pli en lais juxtaposés avec un recouvrement minimum pour éviter un interstice entre des bords voisins de deux lais juxtaposés.

Il est ainsi possible de déposer le premier matériau par des bandes de dimensions inférieures à une largeur du moule de premier pli, ce qui s'avère d'une part plus aisé lorsque le moule est de grande largeur et permet d'autre part de mieux adapter le premier matériau à des formes de moule non développables.

Lorsque le second matériau est déposé sur le premier matériau, avantageusement il est mis en oeuvre un procédé de projection électrostatique de poudre de résine thermoplastique.

Le premier matériau est avantageusement formé dans un matériau ferromagnétique, par exemple un métal tel qu'un acier, un acier inoxydable ferritique ou un alliage comportant du nickel, choisi pour ses propriétés magnétiques et ou de conduction électrique.

Dans une méthode de mise en oeuvre, le premier pli est réalisé en au moins deux parties qui sont juxtaposées sur l'outillage lorsque le premier pli est déposé sur l'outillage. Il est ainsi possible de réaliser pour des pièces de grandes dimensions un premier pli dont les parties restes de dimensions compatibles avec la réalisation et la manipulation d'un élément mince.

Avantageusement, lorsque le premier pli est réalisé en plusieurs parties, les parties constitutives du premier pli sont déterminées de sorte à être réalisée chacune sur des moules partiels de premier pli principalement de forme convexe.

Il est ainsi possible de réaliser chaque partie dans les conditions de dépôt du premier matériau sur un moule convexe ce qui s'avère en pratique moins complexe et moins contraignant en termes de bridage, si un bridage mécanique est utilisé, mais également en termes de mise en tension pour éviter des défauts d'adhérence au moule.

Le premier matériau est par exemple bridé sur le moule de premier pli, lors de l'étape de fabrication dudit premier pli, par l'effet d'un champ magnétique créé au niveau dudit moule de premier pli, et ou d'une différence de potentiel électrique par rapport au moule de premier pli.

Il est ainsi obtenu un bridage performant exploitant les propriétés magnétiques et ou de conduction électrique du premier matériau, nécessaires par ailleurs pour maintenir le premier pli sur l'outillage.

Pour éviter un déplacement du premier pli sur l'outillage pendant le dépôt des couches de matériau composite thermoplastique de la pièce, le premier pli est maintenu bridé sur l'outillage par l'effet d'un champ magnétique créé au niveau dudit outillage, et ou d'une différence de potentiel électrique par rapport à l'outillage, lors du dépôt des couches de matériau composite thermoplastique superposées sur le premier pli.

Lorsque les couches de matériau composite thermoplastique devant former la pièce ont été déposées, le champ magnétique, et ou la différence de potentiel, créé au niveau de l'outillage est annulé, le cas échéant inversé, lors de l'étape de démoulage de la pièce réalisée sur l'outillage.

Les efforts assurant le bridage sont alors annulés, une inversion du champ magnétique et ou de la différence de potentiel de bridage annulant le cas échéant une annulation des forces résiduelles résultant d'un effet d'hystérésis, de sorte que la pièce peut être démoulée sans qu'une adhérence à l'outillage ne rende ce démoulage difficile et sans le risque d'endommagement que pourrait induire une adhérence de la résine sur l'outillage.

La description et les dessins d'un exemple de mise en oeuvre de l'invention, permettront de mieux comprendre les buts et avantages de l'invention. Il est clair que cette description est donnée à titre d'exemple, et n'a pas de caractère limitatif.

Dans les dessins :
- la figure 1 illustre les étapes principales du procédé pour un mode de mise en oeuvre ;
- la figure 2a illustre de manière schématique le maintien du premier matériau d'un premier pli sur un moule de premier pli et la projection du second matériau de poudre de résine thermoplastique sur le premier matériau ;
- la figure 2b illustre de manière schématique l'étape de fusion du second matériau de poudre de résine thermoplastique dans une enceinte chauffante ;
- la figure 2c illustre de manière schématique le dépôt de couche de matériau thermoplastique pour réaliser la pièce sur le premier pli maintenu sur un outillage par des forces magnétiques créées au niveau de l'outillage et ou générées par une différence de potentiel.

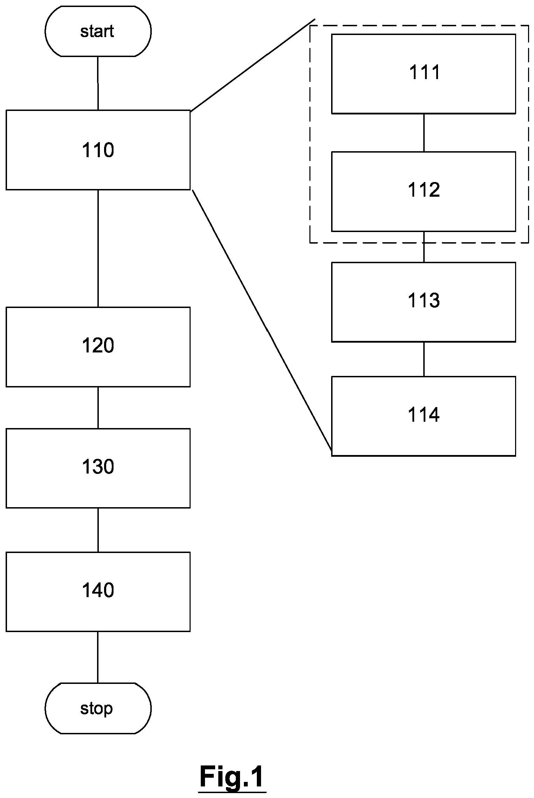

La figure 1 présente de manière synoptique les principales étapes du procédé de l'invention.

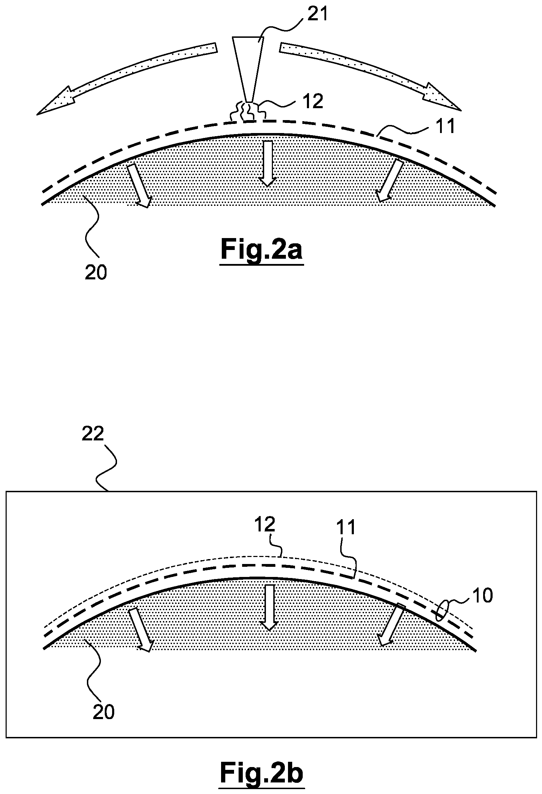

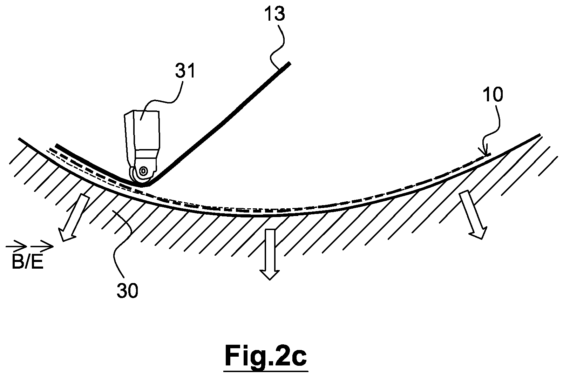

Les figures 2a, 2b et 2c illustrent schématiquement un exemple de mise en oeuvre du procédé.

Suivant le procédé 100, un première étape 110 pour réaliser une pièce en matériau composite thermoplastique comportant un empilage de couches 13 comporte de réaliser un premier pli 10 dur ayant d'une part des propriétés physiques lui permettant d'adhérer temporairement et de manière réversible à un outillage 30 sur lequel la pièce doit être formée et d'autre part des propriétés physico-chimique d'accroche avec la résine thermoplastique des couches de la pièce devant être déposées sur ledit premier pli.

Le premier pli 10 est réalisé sur un moule de premier pli 20.

Le premier pli 10 est réalisé avec une forme aussi proche que possible, sinon identique à la forme de l'outillage 30 sur lequel doivent être déposés les couches de matériau composite thermoplastique devant former la pièce.

Également le premier pli est aussi mince que possible de sorte que son épaisseur soit relativement faible par rapport à l'épaisseur de la pièce à réaliser.

Le moule de premier pli 20 est d'une forme adaptée pour faciliter la réalisation et le démoulage du premier pli 10 dudit moule de premier pli. En particulier, si la pièce à réaliser est principalement concave, le moule de premier pli 20 aura une forme complémentaire principalement convexe.

Pour réaliser le premier pli 10, il est formé un complexe comportant au moins un premier matériau 11 ayant des propriétés électromagnétiques et au moins un second matériau 12 d'une résine thermoplastique.

Dans une première étape 111 de la réalisation du premier pli, le premier matériau 11 est déposé sur le moule de premier pli 10, moule de premier pli dont la forme est une contrepartie géométrique de l'outillage 30 sur lequel la pièce doit être formée de la pièce.

Le premier matériau 11 est avantageusement un matériau métallique formé de fils minces de quelques dizaines de micromètres, tissés ou non, dont la souplesse permet au dit matériau métallique se suivre les formes du moule de premier pli 20.

Suivant les caractéristiques électromagnétiques du premier matériau 11, ledit premier matériau est maintenu sur le moule de premier pli 20 au moyen d'un champ magnétique et ou d'une différence de potentiel électrique, ledit moule de premier pli étant réalisé pour qu'il soit produit à sa surface le champ magnétique voulu, et ou la différence de potentiel électrique voulue, nécessaire pour assurer le maintien du premier matériau sur le moule de premier pli en épousant intimement la forme dudit moule de premier pli.

Le premier matériau 11 peut également être maintenu, conjointement ou non au champ magnétique et ou la différence de potentiel, par des moyens mécaniques comme par exemple des brides, non représentées. Un bridage mécanique seul peut en effet s'avérer suffisant pour placer le premier matériau contre le moule de premier pli 20 en particulier si la forme dudit moule de premier matériau est exclusivement convexe.

Dans une deuxième étape 112 de la réalisation du premier pli 10, de fines particules de poudre de résine du second matériau 12 sont déposées sur le premier matériau. Le dépôt du second matériau est par exemple réalisé par une projection électrostatique.

La projection est par exemple réalisée à l'aide d'un pistolet et d'une solution en dispersion de la poudre de résine si besoin.

Le deuxième matériau 12 est déposé en quantité suffisante pour assurer, dans les étapes ultérieures du procédé, un accrochage des fibres d'une première couche du matériau composite thermoplastique de la pièce malgré les efforts de cisaillement produit lors de la dépose de cette première couche, la première couche étant déposée en étant déformée pour épouser la forme de l'outillage et pour orienter des fibres dans les directions souhaitées.

Le second matériau 12 est avantageusement déposé avec une densité surfacique comprise entre 20 g/m2 et 150 g/m2.

Dans une troisième étape 113 de la réalisation du premier pli 10, le moule de premier pli 20, sur lequel sont déposés le premier matériau 11, maintenu intimement au moule par les forces électrostatiques ou magnétiques et ou générées par la différence de potentiel, et ou le bridage mécanique, et le second matériau 12 déposé en poudre sur le premier matériau, est soumis à une élévation de température, par exemple dans un dispositif de chauffage 22, par exemple un four à rayonnement infrarouge, ou une étuve, ou un autoclave, pour amener les particules du second matériau 12, de résine thermoplastique, au-delà de leurs température de fusion et de transformation vitreuse, ce qui a pour conséquence de produire l'adhérence du second matériau sur le premier matériau.

Lorsque le second matériau 12 est lié au premier matériau 11, la température est ramenée à la température ambiante.

Dans une quatrième étape 114 de la réalisation du premier pli, le premier pli 10 est démoulé en étant séparé du moule de premier pli 20 après avoir relâchés, le cas échéant inversé, le champ électromagnétique du moule et ou la différence de potentielle et ou les brides maintenus jusqu'à la troisième étape 113.

A l'issue de la première étape 110 du procédé, il est ainsi formé un premier pli 10 dur du premier matériau imprégné du second matériau.

Il doit être noté que le premier pli 10 obtenu est de faible épaisseur, sensiblement l'épaisseur des fils ou du tissus métallique du premier matériau, mais, bien que peu rigide en raison de sa faible épaisseur, la forme statique dudit premier pli reste la forme acquise sur le moule de premier pli du fait de la résine du second matériau passée par une température de fusion.

Le matériau métallique des fils du premier matériau 11 est choisi parmi les matériaux ayant des propriétés magnétiques adaptées : une bonne perméabilité magnétique et ou un champ coercitif élevé et ou une aimantation à saturation par exemple, caractéristiques généralement obtenues avec des matériaux ferromagnétiques.Lorsqu'il est souhaité réaliser le bridage, au moins partiellement, par une différence de potentiel, le premier matériau est choisi parmi des matériaux conducteurs électriques de sorte à pouvoir être porté et maintenu à un potentiel électrique souhaité et maintenir une différence de potentiel électrique entre d'une part le premier élément 10 et d'autre part l'outillage 30 et le cas échéant le moule de premier pli 20.

Dans une deuxième étape 120 pour réaliser la pièce en matériau composite thermoplastique, le premier pli 10 réalisé au cours de la première étape 110 est déposé sur un outillage 30 de moulage de la pièce à réaliser.

Le premier pli 10 est maintenu à la surface de l'outillage 30 au moyen d'un champ magnétique ou d'une différence de potentiel électrique entre ledit outillage et ledit premier pli, pour sa partie électriquement conductrice, l'outillage étant réalisé dans un matériau ferromagnétique pour qu'il soit produit à sa surface le champ magnétique et ou dans un matériau électriquement conducteur pour être maintenu à la différence de potentiel électrique voulu nécessaire pour assurer le maintien du premier pli 10 en épousant intimement la forme dudit outillage.

L'outillage est par exemple réalisé dans un acier ou un alliage tel qu'un Invar ®.

Le cas échéant des brides maintiennent le premier pli sur l'outillage 30 en particulier sur des bords dudit outillage.

Dans une troisième étape 130 pour réaliser la pièce en matériau composite thermoplastique, une première couche 13 de matériau composite thermoplastique de la pièce est déposé sur le premier pli 10 maintenu sur l'outillage 30 et les autres couches de matériau composite thermoplastique sont déposés par couches successives et consolidées suivant une méthode connue, par exemple au moyen d'une tête de dépose 31, jusqu'à obtenir le nombre de plis voulus pour la pièce.

Pendant la dépose des couches de matériau composite thermoplastique, le champ magnétique ou la différence de potentiel assurant le maintien sur l'outillage 30 du premier pli 10 est maintenu de sorte que, même dans des zones concaves de l'outillage, les couches successives de matériau composite thermoplastique qui sont appliquées en adhérant directement ou indirectement au premier pli suivent parfaitement la forme de l'outillage.

Dans une quatrième étape 140 pour réaliser la pièce en matériau composite thermoplastique, la pièce en matériau composite thermoplastique réalisée est démoulée de l'outillage 30 en étant séparée dudit outillage après avoir relâchés, le cas échéant inversé, le champ électromagnétique de l'outillage, et ou la différence de potentiel électrique entre l'outillage et le premier pli incorporé à la pièce à ce stade du procédé et ou les brides, maintenus lors du dépôt des couches de matériau composite thermoplastique successives de la pièce.

Suivant différentes variantes du procédé tel qu'il vient d'être décrit dans un premier mode de mise en oeuvre, le procédé peut être adapté en fonctions de contraintes liées à la forme de la pièce à réaliser ou aux matériaux mis en oeuvre.

Ainsi le premier matériau du premier pli 10 peut être formé par une ou plusieurs couches d'un matériau métallique magnétique. Par exemple du nickel, de l'argent, de l'acier inoxydable ferritique.

Le premier matériau 10 peut être déposé sur le moule de premier pli 20 sous la forme de fils en nappes, de tissus, de tricots, de mats ou encore d'une poudre.

Lorsque plusieurs lais sont juxtaposés sur le moule de premier pli 20, de préférence, deux lais voisins sont placés avec un léger recouvrement pour éviter des zones interstitielles qui, ne comportant que de la résine, formeraient une zone fragile du premier pli.

La masse surfacique déposée de premier matériau 11 est choisie pour obtenir l'adhérence magnétique et ou par différence de potentiel recherchée et assurer le support mécanique nécessaire au second matériau 12 pour former un premier pli 10 pouvant être manipulé et servir d'accroche à la première couche de matériau composite thermoplastique de la pièce.

La densité surfacique de premier matériau 11 est avantageusement comprise entre 20 g/m2 et 150 g/m2.

Ainsi suivant une méthode de mise en oeuvre, le premier pli 10 devant être déposé sur l'outillage 30 est réalisé en plusieurs parties qui sont juxtaposées sur l'outillage.

Cette méthode s'avère avantageuse lorsque le premier pli 10 est de grandes dimensions, telles que la manipulation du premier pli en un seul élément serait difficile sans risquer d'endommager ledit premier pli, et ou lorsque la forme du premier pli est complexe avec des zones concaves et des zones convexes, un découpage intelligent permettant dans ce dernier cas de réaliser des parties de premier pli essentiellement à simple courbure pouvant être réalisés sur des moules convexes.

Ainsi suivant une méthode de mise en oeuvre de la première étape 110 de la fabrication du premier pli 10, la seconde étape 112 de dépôt du second matériau 12 sur le premier matériau 11 est réalisé avant la première étape 111, le premier matériau étant alors déposé sur le moule de premier pli 20 alors qu'il comporte déjà la poudre de résine thermoplastique du second matériau.

Avantageusement le complexe formé par le premier matériau et la poudre thermoplastique du second matériau est produit dans une étape amont.

Le procédé permet ainsi de réaliser une pièce en matériau composite thermoplastique avec un premier pli parfaitement bridé sur l'outillage en évitant que la résine du premier pli n'adhère à l'outillage, en évitant les techniques d'aspiration qui requièrent des étanchéités des plis et dont l'homogénéité du placage sur la surface de l'outillage n'est pas garantie, et en évitant l'utilisation de contre-moule, solution complexe et coûteuse.

## Revendications

1. - Procédé (100) de réalisation d'une pièce en matériau composite thermoplastique par dépôt (130) d'au moins une couche (13) en matériau composite thermoplastique sur un outillage (30) **caractérisé en ce qu'**il comporte une étape (120) de dépôt sur l'outillage d'un premier pli (10), déposé sur l'outillage (30) avant le dépôt de l'au moins une couche en matériau composite thermoplastique, le dit premier pli étant un pli durci réalisé préalablement suivant la forme de l'outillage (30) et comportant un premier matériau 11) apte à subir une force d'attraction lorsqu'il est soumis à un champ magnétique, et ou à une différence de potentiel électrique, et comportant un second matériau (12) d'une résine thermoplastique, chimiquement compatible avec la résine de l'au moins une couche en matériau composite thermoplastique pour adhérer avec la dite résine, ledit premier pli étant bridé sur l'outillage 30 lors de l'étape (120) de dépôt sur ledit outillage par l'effet d'un champ magnétique créé au niveau dudit outillage, et ou d'une différence de potentiel électrique avec ledit outillage,.

2. - Procédé suivant la revendication 1 dans lequel le premier matériau (11) et le second matériau (12), déposé sur ledit premier matériau sous la forme d'une poudre de résine thermoplastique, sont soumis, lors d'une étape de fabrication (110) du premier pli (10), à une étape (113) d'élévation de la température au-dessus d'une température de fusion et de transformation vitreuse de la résine thermoplastique en étant bridé sur un moule de premier pli (20), la forme dudit moule de premier pli étant une contrepartie de l'outillage (30).

3. - Procédé suivant la revendication 2 dans lequel le premier matériau (11) est déposé sur le moule de premier pli (20) dans une première étape (111) et, dans une seconde étape (112), le second matériau (12) est déposé par projection de la poudre de résine thermoplastique sur le premier matériau (11) déposé sur ledit moule de premier pli

4. - Procédé suivant l'une des revendications précédentes dans lequel le premier matériau (10) est constitué principalement de fils tissés ou non tissés, et ou de mats, et ou de poudres, déposés pour former une couche ou plusieurs couches superposées dudit premier matériau.

5. - Procédé suivant la revendication 2 ou la revendication 3 ou la revendication 4 en combinaison avec l'une des revendications 2 ou 3 dans lequel le premier matériau (11) est déposé sur le moule de premier pli (20) en lais juxtaposés avec un recouvrement minimum pour éviter un interstice entre des bords voisins de deux lais juxtaposés.

6. - Procédé suivant l'une des revendications précédentes dans lequel le second matériau (12) est déposé sur le premier matériau (11) par projection électrostatique d'une poudre de résine thermoplastique.

7. - Procédé suivant l'une des revendications précédentes dans lequel le premier matériau (11) est formé dans un matériau ferromagnétique tel qu'un acier, un acier inoxydable ferritique ou un alliage comportant du nickel.

8. - Procédé suivant l'une des revendications précédentes dans lequel le premier pli (10) est réalisé en au moins deux parties qui sont juxtaposées sur l'outillage (30) lorsque le premier pli est déposé (120) sur ledit outillage.

9. - Procédé suivant la revendication 8 dans lequel les parties constitutives du premier pli (10) sont déterminées de sorte à être réalisée chacune sur des moules partiels de premier pli principalement de forme convexe.

10. - Procédé suivant la revendication 2 ou suivant l'une des revendications 3 à 9 en combinaison avec la revendication 2 dans lequel le premier matériau est bridé sur le moule de premier pli (20), lors de l'étape (110) de fabrication dudit premier pli, par l'effet d'un champ magnétique créé au niveau dudit moule de premier pli, et ou d'une différence de potentiel électrique avec ledit moule de premier pli,.

11. - Procédé suivant l'une des revendications précédentes dans lequel le premier pli (10) est maintenu bridé sur l'outillage (30) par l'effet d'un champ magnétique créé au niveau dudit outillage, et ou d'une différence de potentiel électrique avec ledit outillage, lors du dépôt (130) de couches (13) de matériau composite thermoplastique superposées sur le premier pli (10).

12. - Procédé suivant la revendication 11 dans lequel le champ magnétique, et ou la différence de potentiel, créé au niveau de l'outillage (30) est annulé, le cas échéant inversé, lors d'une étape (140) de démoulage de la pièce en matériau composite thermoplastique réalisée sur ledit outillage.

## Patentansprüche

1. Verfahren (100) zur Herstellung eines Teils aus einem thermoplastischen Verbundstoffmaterial durch Abscheidung (130) mindestens einer Schicht (13) aus einem thermoplastischen Verbundstoffmaterial auf einem Werkzeug (30), **dadurch gekennzeichnet, dass** dieses einen Schritt (120) der Abscheidung einer ersten Lage (10) auf dem Werkzeug umfasst, die auf dem Werkzeug (30) vor der Abscheidung der mindestens einen Schicht aus einem thermoplastischen Verbundstoffmaterial abgeschieden wird, wobei die erste Lage eine gehärtete Lage ist, die zuvor gemäß der Form des Werkzeugs (30) hergestellt wird und ein erstes Material (11) umfasst, das geeignet ist, einer Anziehungskraft, wenn es einem Magnetfeld unterworfen wird, und/oder einer elektrischen Potentialdifferenz ausgesetzt zu werden, und ein zweites Material (12) aus einem thermoplastischen Harz umfasst, das mit dem Harz der mindestens einen Schicht aus einem thermoplastischen Verbundstoffmaterial kompatibel ist, um an dem Harz zu haften, wobei die erste Lage an das Werkzeug (30) bei dem Schritt (120) der Abscheidung auf dem Werkzeug durch den Effekt eines Magnetfelds, das auf der Ebene des Werkzeugs erzeugt wird, und/oder einer elektrischen Potentialdifferenz mit dem Werkzeug angeflanscht wird.

2. Verfahren nach Anspruch 1, wobei das erste Material (11) und das zweite Material (12), das auf dem ersten Material in der Form eines Pulvers aus thermoplatischem Harz abgeschieden wird, bei einem Herstellungsschritt (110) der ersten Lage (10), einem Schritt (113) der Erhöhung der Temperatur über eine Schmelz- und Glasübergangstemperatur des thermoplastischen Harzes unterworfen werden, indem sie an eine Form (20) der ersten Lage angeflanscht werden, wobei die Form der Form der ersten Lage ein Gegenstück zu dem Werkzeug (30) ist.

3. Verfahren nach Anspruch 2, wobei das erste Material (11) auf der Form (20) der ersten Lage in einem ersten Schritt (111) abgeschieden wird, und, in einem zweiten Schritt (112), das zweite Material (12) durch Projektion des Pulvers aus thermoplastischem Harz auf dem ersten Material (11) abgeschieden wird, das auf der Form der ersten Lage abgeschieden ist.

4. Verfahren nach einem der vorhergehenden Ansprüche, wobei das erste Material (10) hauptsächlich aus geflochtenen oder nicht geflochtenen Drähten und/oder Matten und/oder Pulvern besteht, die abgeschieden werden, um eine Schicht oder mehrere Schichten zu bilden, die über das erste Material gelegt sind.

5. Verfahren nach Anspruch 2 oder Anspruch 3 oder Anspruch 4, in Kombination mit einem der Ansprüche 2 oder 3, wobei das erste Material (11) auf der Form (20) der ersten Lage in nebeneinanderliegenden Stücken mit einer minimalen Bedeckung abgeschieden wird, um einen Zwischenraum zwischen den benachbarten Rändern der beiden nebeneinanderliegenden Stücke zu vermeiden.

6. Verfahren nach einem der vorhergehenden Ansprüche, wobei das zweite Material (12) über dem ersten Material (11) durch elektrostatische Projektion eines Pulvers aus thermoplastischem Harz abgeschieden wird.

7. Verfahren nach einem der vorhergehenden Ansprüche, wobei das erste Material (11) aus einem ferromagnetischen Material, wie einem Stahl, einem rostfreien ferritischen Stahl oder einer Nickel umfassenden Legierung, gebildet wird.

8. Verfahren nach einem der vorhergehenden Ansprüche, wobei die erste Lage (10) aus mindestens zwei Abschnitten hergestellt wird, die auf dem Werkzeug (30) nebeneinandergelegt werden, wenn die erste Lage auf dem Werkzeug abgeschieden wird (120).

9. Verfahren nach Anspruch 8, wobei die Abschnitte, welche die erste Lage (10) bilden, derart bestimmt werden, dass sie jeweils auf Teilformen der ersten Lage hauptsächlich mit konvexer Form hergestellt werden.

10. Verfahren nach Anspruch 2 oder nach einem der Ansprüche 3 bis 9, in Kombination mit Anspruch 2, wobei das erste Material an die Form (20) der ersten Lage in dem Herstellungsschritt (110) der ersten Lage durch den Effekt eines Magnetfelds, das auf der Ebene der Form der ersten Lage erzeugt wird, und/oder einer elektrischen Potentialdifferenz mit der Form der ersten Lage angeflanscht wird.

11. Verfahren nach einem der vorhergehenden Ansprüche, wobei die erste Lage (10) durch den Effekt eines Magnetfelds, das auf der Ebene des Werkzeugs erzeugt wird, und/oder einer elektrischen Potentialdifferenz mit dem Werkzeug bei der Abscheidung (130) der Schichten (13) des thermoplastischen Verbundstoffmaterials, die über die erste Lage (10) gelegt sind, angeflanscht an das Werkzeug (30) gehalten wird.

12. Verfahren nach Anspruch 11, wobei das Magnetfeld und/oder die Potentialdifferenz, erzeugt auf der Ebene des Werkzeugs (30), bei einem Entformungsschritt (140) des Teils aus einem thermoplastischen Verbundstoffmaterial, der an dem Werkzeug vorgenommen wird, aufgehoben, gegebenenfalls umgekehrt, wird.

## Claims

1. - Process (100) for producing a thermoplastic composite part by deposition (130) of at least one thermoplastic composite layer (13) on a tool (30), wherein it includes a step (120) of depositing on the tool a first ply (10), deposited on the tool (30) before the deposition of the at least one thermoplastic composite layer, said first ply being a hardened ply produced beforehand to match the shape of the tool (30) and including a first material (11) able to experience an attractive force when it is subjected to a magnetic field, and/or to an electrical potential difference, and including a second material (12) of a thermoplastic resin that is chemically compatible with the resin of the at least one thermoplastic composite layer in order to adhere with said resin, said first ply being clamped to the tool 30 in the step (120) of depositing on said tool by the effect of a magnetic field established at the level of said tool, and/or of an electrical potential difference with said tool.

2. - Process according to Claim 1, wherein the first material (11) and the second material (12), which is deposited on said first material in the form of a thermoplastic-resin powder, are subjected, in a step (110) of manufacturing the first ply (10), to a step (113) in which temperature is increased above a melting point and glass transition temperature of the thermoplastic resin, while being clamped to a first-ply mold (20), the shape of said first-ply mold being a counterpart of the tool (30).

3. - Process according to Claim 2, wherein the first material (11) is deposited on the first-ply mold (20) in a first step (111) and, in a second step (112), the second material (12) is deposited by spraying thermoplastic-resin powder onto the first material (11) deposited on said first-ply mold.

4. - Process according to one of the preceding claims, wherein the first material (10) mainly consists of woven or nonwoven wires and/or of mats, and/or of powders, that are deposited to form a layer or a plurality of superposed layers of said first material.

5. - Process according to Claim 2 or Claim 3 or Claim 4 in combination with one of Claims 2 or 3, wherein the first material (11) is deposited on the first-ply mold (20) in widths juxtaposed with a minimum overlap to avoid a gap between the neighboring edges of two juxtaposed widths.

6. - Process according to one of the preceding claims, wherein the second material (12) is deposited on the first material (11) by electrostatic spraying of a thermoplastic-resin powder.

7. - Process according to one of the preceding claims, wherein the first material (11) is formed from a ferromagnetic material such as a steel, a ferritic stainless steel or a nickel-containing alloy.

8. - Process according to one of the preceding claims, wherein the first ply (10) is produced in at least two portions that are juxtaposed on the tool (30) when the first ply is deposited (120) on said tool.

9. - Process according to Claim 8, wherein the constituent portions of the first ply (10) are defined so as each to be produced on partial first-ply molds of mainly convex shape.

10. - Process according to Claim 2 or according to one of Claims 3 to 9 in combination with Claim 2, wherein the first material is clamped to the first-ply mold (20), in the step (110) of manufacturing said first ply, by the effect of a magnetic field established at the level of said first-ply mold, and/or of an electrical potential difference with said first-ply mold.

11. - Process according to one of the preceding claims, wherein the first ply (10) is maintained clamped on the tool (30) by the effect of a magnetic field established at the level of said tool, and/or of an electrical potential difference with said tool, during the deposition (130) of thermoplastic composite layers (13) superposed on the first ply (10).

12. - Process according to Claim 11, wherein the magnetic field, and/or the potential difference, established at the level of the tool (30) is cancelled, and if needs be reversed, in a step (140) of demolding the thermoplastic composite part produced on said tool.
